(19) Europäisches Patentamt
European Patent Office
Office européen des brevets

(11) **EP 4 548 983 A1**

## (12) EUROPEAN PATENT APPLICATION

(43) Date of publication:
**07.05.2025 Bulletin 2025/19**

(21) Application number: **24203493.2**

(22) Date of filing: **30.09.2024**

(51) International Patent Classification (IPC):
**A63B 37/00** (2006.01)

(52) Cooperative Patent Classification (CPC):
**A63B 37/0017; A63B 37/0021; A63B 37/00222; A63B 37/0031; A63B 37/0043; A63B 37/00621; A63B 37/00622; A63B 37/0063; A63B 37/0075; A63B 37/00922**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **30.10.2023 JP 2023185329**

(71) Applicant: **Sumitomo Rubber Industries, Ltd.**
**Kobe-shi, Hyogo 651-0072 (JP)**

(72) Inventors:
• **INOUE, Hidetaka**
**Kobe-shi, 651-0072 (JP)**
• **SAJIMA, Takahiro**
**Kobe-shi, 651-0072 (JP)**
• **FUKAO, Kaita**
**Kobe-shi, 651-0072 (JP)**

(74) Representative: **Manitz Finsterwald**
**Patent- und Rechtsanwaltspartnerschaft mbB**
**Martin-Greif-Strasse 1**
**80336 München (DE)**

## (54) GOLF BALL

(57) An object of the present disclosure is to provide a golf ball that has a small difference between a flight distance on driver shots by a golfer with a fast head speed and a flight distance on driver shots by a golfer with a slow head speed, and can reduce flight distance handicap. The present disclosure provides a golf ball comprising a spherical core, an intermediate layer, and an outermost cover having a plurality of dimples formed thereon, wherein the spherical core is formed from a rubber composition containing a base rubber, a co-crosslinking agent, and a crosslinking initiator, the base rubber contains a natural rubber, a total lower volume of the plurality of dimples is 365 mm$^3$ or more, and an occupation ratio of a total area of the plurality of dimples in a surface area of a phantom sphere that is assumed to have no dimples on the outermost cover is 75% or more.

EP 4 548 983 A1

**Description**

## FIELD OF THE DISCLOSURE

The present disclosure relates to a golf ball, and particularly relates to a golf ball comprising a spherical core, an intermediate layer, an outermost cover and dimples.

## DESCRIPTION OF THE RELATED ART

Conventionally, as a spherical core of a golf ball, spherical cores made from various rubber materials have been proposed. For example, JP S60-92780 A discloses a range golf ball, obtained by vulcanizing a composition containing 100 parts by weight of a base rubber, 3 to 35 parts by weight of a low-resilient rubber, 20 to 30 parts by weight of methacrylic acid, and 20 to 50 parts by weight of a metal compound that can form a metal salt with methacrylic acid.

In addition, JP S61-71069 A discloses a range golf ball, obtained from a composition containing 100 parts by weight of a base rubber, 3 to 35 parts by weight of a 10 to 60 mole % epoxidized natural rubber, 20 to 35 parts by weight of methacrylic acid, and 20 to 50 parts by weight of zinc oxide.

## SUMMARY OF THE DISCLOSURE

When several people play golf together, there is a case that golfer's head speed is different from each other. In such case, different teeing grounds are used for the respective golfers to close the difference in the fight distance between the golfers. However, when the head speeds differ greatly, sometimes the difference in the flight distance cannot be closed only by using different teeing grounds. Thus, in order to reduce a handicap of the flight distance, it is necessary to prepare a variety of golf balls with different flight distance performances according to the difference in the flight distance.

The present disclosure has been made in view of the above circumstances, and an object of the present disclosure is to provide a golf ball that has a small difference between a flight distance on driver shots by a golfer with a fast head speed and a flight distance on driver shots by a golfer with a slow head speed and reduces the handicap of the flight distance.

The present disclosure that has solved the above problem provides a golf ball comprising a spherical core, an intermediate layer covering the spherical core, and an outermost cover positioned outside the intermediate layer and having a plurality of dimples formed thereon, wherein the spherical core is formed from a rubber composition containing a base rubber, a co-crosslinking agent, and a crosslinking initiator, the base rubber contains a natural rubber, a total lower volume of the plurality of dimples is 365 mm$^3$ or more, and an occupation ratio of a total area of the plurality of dimples in a surface area of a virtual sphere that is assumed to have no dimples on the outermost cover is 75% or more.

If the spherical core is formed from the rubber composition containing the natural rubber, the ball initial velocity on driver shots is reduced. Herein, if the golf ball has the spherical core containing the natural rubber, the reduction in the ball initial velocity is greater as the head speed is faster. Thus, the difference between the flight distance on driver shots by a golfer with a high head speed and the flight distance on driver shots by a golfer with a low head speed becomes small.

In addition, the dimple pattern having the large total lower volume lowers the lift force of the hit ball. Thus, when the golf ball is hit on driver shots by a golfer with a fast head speed, the lift force is not sufficiently obtained, the carry (the distance from the point of hitting the golf ball to the point that the golf ball lands on the ground) becomes short, and thus the flight distance decreases. On the contrary, when the golf ball is hit on driver shots by a golfer with a slow head speed, the ball speed is not fast and thus has little effect on the height of the ball, and instead the rolling distance becomes long and thus the flight distance increases.

Therefore, the golf ball according to the present disclosure has a small difference between a flight distance on driver shots by a golfer with a fast head speed and a flight distance on driver shots by a golfer with a slow head speed.

The golf ball according to the present disclosure has a small difference between a flight distance on driver shots by a golfer with a fast head speed and a flight distance on driver shots by a golfer with a slow head speed. Thus, if the golf ball according to the present disclosure is used, the handicap of the flight distance due to the difference of the head speeds can be reduced.

## BRIEF DESCRIPTION OF THE DRAWINGS

Fig. 1 is a partially cutaway cross-sectional view showing a golf ball according to one embodiment of the present disclosure;
Fig. 2 is an enlarged sectional view of dimples formed on an outermost cover;

Fig. 3 is a front view of dimple patterns No. I to VI formed on an outermost cover;
Fig. 4 is a plane view of dimple patterns No. I to VI formed on an outermost cover;

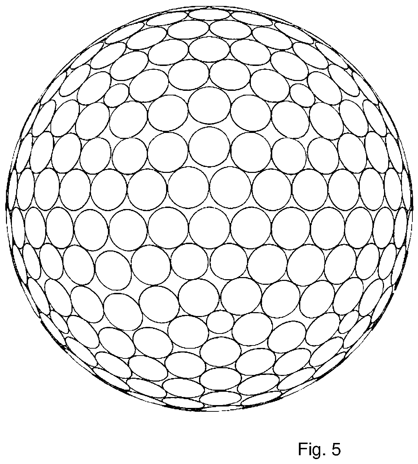

Fig. 5 is a front view of a dimple pattern No. VII formed on an outermost cover;

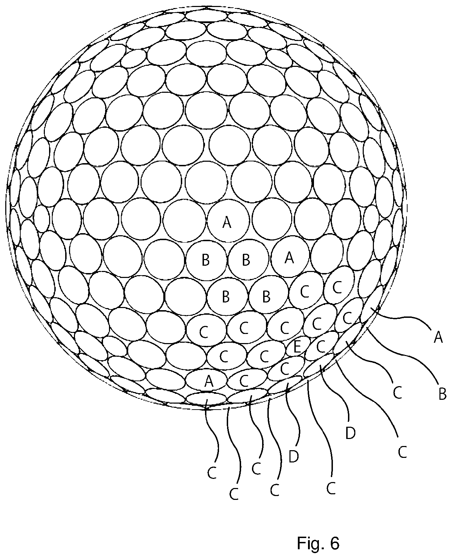

Fig. 6 is a plane view of a dimple pattern No. VII formed on an outermost cover;

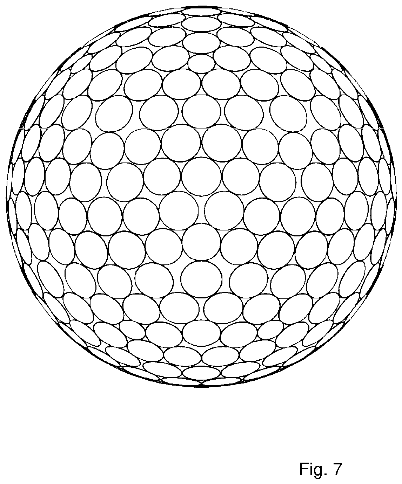

Fig. 7 is a front view of a dimple pattern No. VIII formed on an outermost cover; and

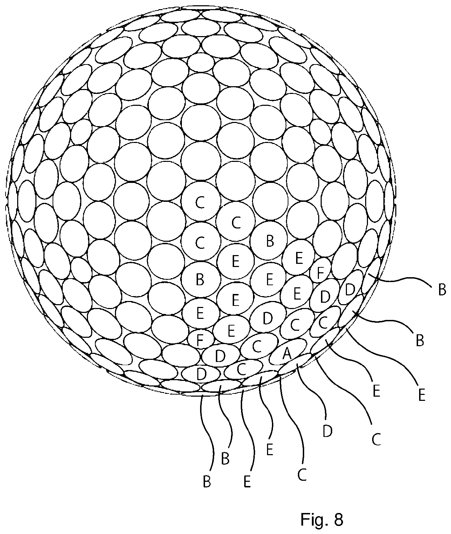

Fig. 8 is a plane view of a dimple pattern No. VIII formed on an outermost cover.

## DESCRIPTION OF THE PREFERRED EMBODIMENT

The golf ball according to the present disclosure comprises a spherical core, an intermediate layer covering the spherical core, and an outermost cover disposed outside the intermediate layer and having a plurality of dimples formed thereon.

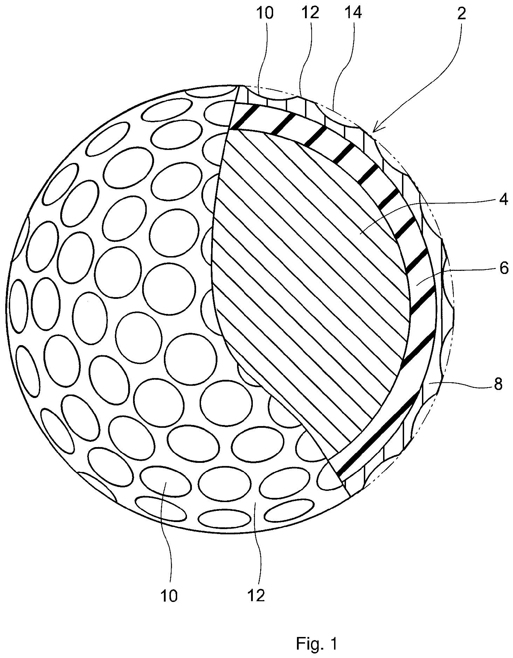

A golf ball 2 shown in Fig. 1 comprises a spherical core 4, an intermediate layer 6 covering the spherical core 4, and an outermost cover 8 positioned outside the intermediate layer 6. The golf ball 2 has a plurality of dimples 10 on the surface. Other portions than the dimples 10 on the surface of the golf ball 2 are lands 12. The golf ball 2 is provided with a paint layer and a mark layer on an outer side of the outermost cover 8, but these layers are not depicted.

(Spherical core)

The spherical core is formed from a rubber composition containing a base rubber, a co-crosslinking agent, and a crosslinking initiator.

The base rubber contains a natural rubber (NR). If the natural rubber is contained, the ball initial velocity on driver shots decreases. It is noted that the lowering degree of the ball initial velocity on driver shots by a golfer with a low head speed is smaller than the lowering degree of the ball initial velocity on driver shots by a golfer with a high head speed. Thus, the flight distance difference between the golfer with a low head speed and the golfer with a high head speed becomes small.

The natural rubber is prepared by slicing plants that produce natural rubber latex, collecting the latex, and coagulating the rubber component contained in the latex. The natural rubber may be used solely, or at least two of them may be used in combination.

Examples of the plants that produce the natural rubber latex include Para rubber tree and Ceara rubber tree which belong to the Euphorbiaceae family; Indian rubber tree, Panama rubber tree and Lagos rubber tree which belong to the Moraceae family; Arabia rubber tree and Tragacanth rubber tree which belong to the Fabaceae family; Jelutong tree, Zanzibar rubber tree, Funtumia elastica and Urceola which belong to the Apocynaceae family; Guayule rubber tree and Rubber dandelion which belong to the Composite family; Gutta-percha tree, Balata rubber tree and Sapodilla which belong to the Sapotaceae family; Ipomoea nil which belongs to the Asclepiadaceae family; and Eucommia which belongs to the Eucommiaceae family.

Examples of the natural rubber include a CV grade in which the rubber viscosity is stabilized by adding a viscosity modifier or the like to the raw latex, and a non-CV grade in which the rubber viscosity is not stabilized. These natural rubbers may be used solely, or at least two of them may be used in combination. Among them, the CV grade having the stabilized viscosity is particularly preferable. It is noted that the natural rubber may be either SMR (Standard Malaysian Rubber) or SVR (Standard Vietnam Rubber).

The natural rubber is a cis-1,4-polyisoprene, and each of a sheet rubber and a block rubber can be used. In addition, the natural rubber also includes a modified product of the natural rubber, i.e. a modified natural rubber such as an epoxidized natural rubber, a methacrylic acid-modified natural rubber, a halogen-modified natural rubber, a deproteinized natural rubber, a maleic acid-modified natural rubber, a sulfonic acid-modified natural rubber, and a styrene-modified natural rubber. Among them, the natural rubber preferably does not contain the epoxidized natural rubber.

As the natural rubber, Technical Specified Rubbers (TSR), or Ribbed Smoked Sheet (RSS) is preferable. In addition, the natural rubber may contain a viscosity stabilizer.

The Mooney viscosity ($ML_{1+4}$ (100 °C)) of the natural rubber is preferably 30 or more, more preferably 35 or more, and even more preferably 40 or more, and is preferably 80 or less, more preferably 75 or less, and even more preferably 70 or less. It is noted that the Mooney viscosity ($ML_{1+4}$ (100 °C)) in the present disclosure is a value measured according to JIS K6300 (2013) using an L rotor under the conditions of preheating time: 1 minute, rotor rotation time: 4 minutes, and temperature: 100 °C.

The base rubber may consist of the natural rubber, or contain the natural rubber and a synthesized rubber.

When the base rubber contains the natural rubber and the synthesized rubber, the amount of the natural rubber is preferably 20 mass % or more, more preferably 30 mass % or more, even more preferably 40 mass % or more, and most preferably 70 mass % or more in 100 mass % of the base rubber. If the amount is 20 mass % or more, the shot feeling on iron shots is better.

Examples of the synthesized rubber include a diene-based rubber such as a polybutadiene rubber (BR), a polyisoprene rubber (IR), a styrene-polybutadiene rubber (SBR), a chloroprene rubber (CR), a butyl rubber (IIR), and an acrylonitrile-butadiene rubber (NBR); and a non-diene-based rubber such as an ethylene-propylene rubber (EPM), an ethylene-propylene-diene rubber (EPDM), a urethane rubber, a silicone rubber, an acrylic rubber, an epichlorohydrin rubber, a polysulfide rubber, a fluororubber, and a chlorosulfonated polyethylene rubber. These rubbers may be used solely, or at least two of them may be used in combination.

The base rubber may contain the diene-based rubber as the synthesized rubber. In this case, the amount of the diene-based rubber is preferably 5 mass % or more, more preferably 10 mass % or more, and even more preferably 15 mass % or more, and is preferably 80 mass % or less, more preferably 70 mass % or less, and even more preferably 60 mass % or less in 100 mass % of the base rubber.

The base rubber preferably contains the polybutadiene rubber as the diene-based rubber. In particular, the base rubber more preferably contains a high-cis polybutadiene having a cis-1,4 bond in an amount of 40 mass % or more, preferably 80 mass % or more, and more preferably 90 mass % or more. The amount of the high-cis polybutadiene is preferably 50 mass % or more, more preferably 70 mass % or more, and even more preferably 90 mass % or more in the diene-based rubber. The diene-based rubber also preferably consists of the high-cis polybutadiene rubber.

The amount of the 1,2-vinyl bond in the high-cis polybutadiene is preferably 2.0 mass % or less, more preferably 1.7 mass % or less, and even more preferably 1.5 mass % or less.

The high-cis polybutadiene is preferably one synthesized using a rare-earth element catalyst. When a neodymium catalyst employing a neodymium compound which is a lanthanum series rare-earth element compound, is used, a polybutadiene rubber having a high amount of the cis-1,4 bond and a low amount of the 1,2-vinyl bond is obtained with an excellent polymerization activity, and thus such polybutadiene rubber is particularly preferable.

The molecular weight distribution Mw/Mn (Mw: weight average molecular weight, Mn: number average molecular weight) of the high-cis polybutadiene is preferably 2.0 or more, more preferably 2.2 or more, and even more preferably 2.4 or more, and is preferably 6.0 or less, more preferably 5.0 or less, and even more preferably 4.0 or less. It is noted that the molecular weight distribution is measured by gel permeation chromatography ("HLC-8120GPC" available from Tosoh Corporation) using a differential refractometer as a detector under the conditions of column: GMHHXL (available from Tosoh Corporation), column temperature: 40 °C, and mobile phase: tetrahydrofuran, and calculated by converting based on polystyrene standard. If the molecular weight distribution (Mw/Mn) of the high-cis polybutadiene falls within the above range, the processability is enhanced.

The Mooney viscosity ($ML_{1+4}$ (100 °C)) of the high-cis polybutadiene is preferably 30 or more, more preferably 32 or more, and even more preferably 35 or more, and is preferably 140 or less, more preferably 120 or less, and even more preferably 100 or less.

The co-crosslinking agent has an action of crosslinking a rubber molecule by graft polymerization to a base rubber molecular chain. The co-crosslinking agent may be used solely, or at least two of them may be used in combination. As the co-crosslinking agent, an $\alpha,\beta$-unsaturated carboxylic acid having 3 to 8 carbon atoms and/or a metal salt thereof is preferable. Examples of the $\alpha,\beta$-unsaturated carboxylic acid having 3 to 8 carbon atoms include acrylic acid, methacrylic acid, fumaric acid, maleic acid and crotonic acid.

Examples of the metal ion constituting the metal salt of the $\alpha,\beta$-unsaturated carboxylic acid having 3 to 8 carbon atoms include a monovalent metal ion such as sodium, potassium and lithium; a divalent metal ion such as magnesium, calcium, zinc, barium and cadmium; a trivalent metal ion such as aluminum; and other metal ions such as tin and zirconium. The metal component may be used solely or as a mixture of at least two of them. Among them, the divalent metal ion such as magnesium, calcium, zinc, barium and cadmium is preferably used as the metal component. This is because if the divalent metal salt of the $\alpha,\beta$-unsaturated carboxylic acid having 3 to 8 carbon atoms is used, a metal crosslinking easily generates between the rubber molecules. Especially, as the divalent metal salt, zinc acrylate is preferable, because zinc acrylate enhances the resilience of the obtained golf ball. It is noted that the $\alpha,\beta$-unsaturated carboxylic acid having 3 to 8 carbon atoms and/or the metal salt thereof may be used solely, or at least two of them may be used in combination.

The amount of the co-crosslinking agent can be appropriately adjusted depending on the desired hardness of the spherical core. The amount of the co-crosslinking agent is preferably 20 parts by mass or more, more preferably 23 parts by mass or more, and even more preferably 25 parts by mass or more, and is preferably 60 parts by mass or less, more preferably 55 parts by mass or less, and even more preferably 50 parts by mass or less, with respect to 100 parts by mass of the base rubber.

The crosslinking initiator is blended to crosslink the base rubber component. As the crosslinking initiator, an organic peroxide is suitable. Specific examples of the organic peroxide include dicumyl peroxide, 1,1-bis(t-butylperoxy)-3,3,5-trimethylcyclohexane, 2,5-dimethyl-2,5-di(t-butylperoxy) hexane and di-t-butyl peroxide. These organic peroxides may be used solely or as a mixture of at least two of them. Among them, dicumyl peroxide is preferably used.

The amount of the crosslinking initiator can be appropriately adjusted depending on the desired hardness of the spherical core. The amount of the crosslinking initiator is preferably 0.2 part by mass or more, more preferably 0.5 part by mass or more, and even more preferably 0.7 part by mass or more, and is preferably 5.0 parts by mass or less, more preferably 2.5 parts by mass or less, and even more preferably 2.0 parts by mass or less, with respect to 100 parts by mass of the base rubber.

In the case that the co-crosslinking agent of the rubber composition consists of the α,β-unsaturated carboxylic acid having 3 to 8 carbon atoms, the rubber composition preferably further contains a metal compound. If the α,β-unsaturated carboxylic acid having 3 to 8 carbon atoms is neutralized with the metal compound in the rubber composition, substantially the same effect as using the metal salt of the α,β-unsaturated carboxylic acid having 3 to 8 carbon atoms as the co-crosslinking agent is provided. In addition, in the case that the α,β-unsaturated carboxylic acid having 3 to 8 carbon atoms and the metal salt thereof are used in combination as the co-crosslinking agent, the metal compound may be used.

The metal compound is not particularly limited, as long as it can neutralize the α,β-unsaturated carboxylic acid having 3 to 8 carbon atoms in the rubber composition. Examples of the metal compound include a metal hydroxide such as magnesium hydroxide, zinc hydroxide, calcium hydroxide, sodium hydroxide, lithium hydroxide, potassium hydroxide, and copper hydroxide; a metal oxide such as magnesium oxide, calcium oxide, zinc oxide, and copper oxide; and a metal carbonate such as magnesium carbonate, zinc carbonate, calcium carbonate, sodium carbonate, lithium carbonate, and potassium carbonate. As the metal compound, the divalent metal compound is preferable, the zinc compound is more preferable. This is because the divalent metal compound reacts with the α,β-unsaturated carboxylic acid having 3 to 8 carbon atoms to form a metal crosslinking. The metal compound may be used solely, or at least two of them may be used in combination.

The rubber composition may further contain an organic sulfur compound. However, it is also preferable that the organic sulfur compound is not contained. The organic sulfur compound is not particularly limited, as long as it is an organic compound having a sulfur atom in the molecule thereof. Examples of the organic sulfur compound include an organic compound having a thiol group (-SH) or a polysulfide bond having 2 to 4 sulfur atoms (-S-S-, -S-S-S-, or -S-S-S-S-), and a metal salt thereof (-SM, -S-M-S- or the like; M is a metal atom). The organic sulfur compound may be used solely or as a mixture of at least two of them.

Examples of the organic sulfur compound include thiophenols, thionaphthols, polysulfides, thiurams, thiocarboxylic acids, dithiocarboxylic acids, sulfenamides, dithiocarbamates, and thiazoles. As the organic sulfur compound, diphenyl disulfides (e.g. diphenyl disulfide, bis(pentabromophenyl) disulfide), thiophenols, and thionaphthols (e.g. 2-thionaphthol) are preferably used.

The amount of the organic sulfur compound can be appropriately adjusted depending on the desired resilience performance of the spherical core. For example, the amount of the organic sulfur compound is preferably 0.05 part by mass or more, more preferably 0.1 part by mass or more, and even more preferably 0.2 part by mass or more, and is preferably 5.0 parts by mass or less, more preferably 3.0 parts by mass or less, and even more preferably 2.0 parts by mass or less, with respect to 100 parts by mass of the base rubber.

The rubber composition may further contain a carboxylic acid and/or a metal salt thereof. As the carboxylic acid and/or the metal salt thereof, a carboxylic acid having 1 to 30 carbon atoms and/or a metal salt thereof is preferable. As the carboxylic acid, an aliphatic carboxylic acid (a saturated fatty acid or an unsaturated fatty acid), or an aromatic carboxylic acid (such as benzoic acid) can be used. In the case that the carboxylic acid and/or the metal salt thereof is contained, the amount of the carboxylic acid and/or the metal salt thereof is preferably 1 part by mass or more and 40 parts by mass or less with respect to 100 parts by mass of the base rubber.

The rubber composition may further contain an additive such as a filler for adjusting weight or the like, an antioxidant, a peptizing agent, and a softener, where necessary.

The filler blended in the rubber composition is mainly used as a weight adjusting agent for adjusting the weight of the golf ball obtained as a final product, and may be blended where necessary. Examples of the filler include an inorganic filler such as barium sulfate, calcium carbonate, magnesium oxide, tungsten powder, and molybdenum powder.

The rubber composition can be obtained by kneading the base rubber, the co-crosslinking agent, the crosslinking initiator, and the other optional components. The kneading method is not particularly limited. For example, the kneading can be conducted with a conventional kneading machine such as a kneading roll, a banbury mixer and a kneader.

The spherical core can be molded, for example, by heat pressing the core rubber composition. The molding conditions for heat pressing the core rubber composition may be determined appropriately depending on the rubber composition. Generally, the heat pressing is preferably carried out at a temperature of 130 °C to 200 °C for 10 to 60 minutes, or carried out in a two-step heating of heating at a temperature of 130 °C to 150 °C for 20 to 40 minutes followed by heating at a temperature of 160 °C to 180 °C for 5 to 15 minutes.

The diameter of the spherical core is preferably 34.8 mm or more, more preferably 36.8 mm or more, and even more preferably 38.0 mm or more, and is preferably 42.2 mm or less, more preferably 41.8 mm or less, even more preferably 41.2 mm or less, and most preferably 40.8 mm or less.

When the spherical core has a diameter in the range from 34.8 mm to 42.2 mm, the compression deformation amount of the spherical core (shrinking amount of the spherical core along the compression direction) when applying a load from an initial load of 98 N to a final load of 1275 N to the spherical core is preferably 2.0 mm or more, more preferably 2.5 mm or more, and even more preferably 3.0 mm or more, and is preferably 5.0 mm or less, more preferably 4.5 mm or less, and even more preferably 4.0 mm or less. If the compression deformation amount falls within the above range, the shot feeling is better.

A center hardness (H0) of the spherical core, a hardness ($H_{2.5}$) at a point having a radial distance of 2.5 mm from a center of the spherical core, a hardness ($H_{5.0}$) at a point having a radial distance of 5.0 mm from the center of the spherical core, a hardness ($H_{7.5}$) at a point having a radial distance of 7.5 mm from the center of the spherical core, a hardness ($H_{10}$) at a point having a radial distance of 10 mm from the center of the spherical core, a hardness ($H_{12.5}$) at a point having a radial distance of 12.5 mm from the center of the spherical core, a hardness ($H_{15}$) at a point having a radial distance of 15 mm from the center of the spherical core, and a surface hardness (Hs) satisfy a relationship of $H0 < H_{2.5} < H_{5.0} < H_{7.5} < H_{10} < H_{12.5} < H_{15} < Hs$, and the center hardness (H0) of the spherical core is 60 or less in Shore C hardness.

If the hardness distribution of the spherical core satisfies the above requirement, the spherical core smoothly deforms when being hit, and thus the shot feeling is better.

The center hardness (H0), the hardness ($H_{2.5}$), the hardness ($H_{10}$), the hardness ($H_{12.5}$) and the hardness ($H_{15}$) of the spherical core preferably satisfy relationships of $H_{2.5} - H0 \geq 3.0$, $H_{12.5} - H_{10} \geq 3.0$ and $H_{15} - H_{12.5} \geq 3.0$ in Shore C hardness. If the hardness difference ($H_{2.5} - H0$), the hardness difference ($H_{12.5} - H_{10}$) and the hardness difference ($H_{15} - H_{12.5}$) fall within the above range, the deformation amount of the spherical core becomes greater on approach shots, the ball initial velocity right after hitting the golf ball can be controlled to a lower level, and the flight distance controllability on approach shots is further enhanced.

The hardness difference ($H_{2.5} - H0$) between the hardness ($H_{2.5}$) at the point having the radial distance of 2.5 mm from the center of the spherical core and the center hardness (H0) of the spherical core is preferably 3.0 or more, more preferably 3.3 or more, and even more preferably 3.5 or more, and is preferably 12.0 or less, more preferably 11.0 or less, and even more preferably 10.0 or less in Shore C hardness.

The hardness difference ($H_{12.5} - H_{10}$) between the hardness ($H_{12.5}$) at 12.5 mm point from the center of the spherical core and the hardness ($H_{10}$) at 10 mm point from the center of the spherical core is preferably 3.0 or more, more preferably 3.4 or more, and even more preferably 3.8 or more, and is preferably 11.0 or less, more preferably 10.0 or less, and even more preferably 9.0 or less in Shore C hardness.

The hardness difference ($H_{15} - H_{12.5}$) between the hardness ($H_{15}$) at the point having the radial distance of 15 mm from the center of the spherical core and the hardness ($H_{12.5}$) at the point having the radial distance of 12.5 mm from the center of the spherical core is preferably 3.0 or more, more preferably 3.4 or more, and even more preferably 3.8 or more, and is preferably 10.0 or less, more preferably 9.0 or less, and even more preferably 8.0 or less in Shore C hardness.

The hardness ($H_{5.0}$), the hardness ($H_{7.5}$) and the hardness ($H_{10}$) of the spherical core preferably satisfy relationships of $H_{7.5} - H_{5.0} < 3.0$ and $H_{10} - H_{7.5} < 3.0$ in Shore C hardness. If the hardness difference ($H_{7.5} - H_{5.0}$) and the hardness difference ($H_{10} - H_{7.5}$) fall within the above range, the deformation energy derived from the hitting is easily transmitted to the inside of the spherical core, and the properties of the spherical core easily exert.

The hardness difference ($H_{7.5} - H_{5.0}$) between the hardness ($H_{7.5}$) at the point having the radial distance of 7.5 mm from the center of the spherical core and the hardness ($H_{5.0}$) at the point having the radial distance of 5.0 mm from the center of the spherical core is preferably 0.2 or more, more preferably 0.3 or more, and even more preferably 0.4 or more, and is preferably less than 3.0, more preferably 2.8 or less, and even more preferably 2.6 or less in Shore C hardness.

The hardness difference ($H_{10} - H_{7.5}$) between the hardness ($H_{10}$) at the point having the radial distance of 10 mm from the center of the spherical core and the hardness ($H_{7.5}$) at the point having the radial distance of 7.5 mm from the center of the spherical core is preferably 0.1 or more, more preferably 0.2 or more, and even more preferably 0.3 or more, and is preferably less than 3.0, more preferably 2.9 or less, and even more preferably 2.8 or less in Shore C hardness.

The hardness difference (Hs-H0) between the surface hardness (Hs) of the spherical core and the center hardness (H0) of the spherical core is preferably 20 or more, more preferably 22 or more, and even more preferably 24 or more in Shore C hardness. If the hardness difference (Hs-H0) is 20 or more, the spin rate on long iron shots does not excessively increase and an excess lift up is controlled to provide a stable trajectory. The hardness difference (Hs-H0) is preferably 40 or less, more preferably 37 or less, and even more preferably 35 or less in Shore C hardness.

The center hardness (H0) of the spherical core is preferably 42 or more, more preferably 44 or more, and even more preferably 46 or more, and is preferably 60 or less, more preferably 57 or less, and even more preferably 55 or less in Shore C hardness.

The surface hardness (Hs) of the spherical core is preferably 70 or more, more preferably 72 or more, and even more preferably 74 or more, and is preferably 90 or less, more preferably 87 or less, and even more preferably 85 or less in Shore C hardness.

(Intermediate layer)

The golf ball according to the present disclosure comprises an intermediate layer covering the spherical core.

The slab hardness (Hm) of the intermediate layer composition constituting the intermediate layer is preferably 50 or more, more preferably 55 or more, and even more preferably 60 or more in Shore D hardness. If the slab hardness (Hm) is 50 or more, the flight distance performance on fairway wood shots is better. In addition, the slab hardness (Hm) is preferably 74 or less, more preferably 72 or less, and even more preferably 70 or less in Shore D hardness. It is noted that in the case that the intermediate layer has a plurality of layers, the material hardness of the intermediate layer composition constituting the outermost intermediate layer is deemed as the material hardness Hm.

The thickness (Tm) of the intermediate layer is preferably 0.8 mm or more, more preferably 0.9 mm or more, and even more preferably 1.0 mm or more, and is preferably 3.0 mm or less, more preferably 2.6 mm or less, and even more preferably 2.2 mm or less. It is noted that in the case that the intermediate layer has a plurality of layers, the total thickness of all the intermediate layers is deemed as the thickness Tm of the intermediate layer.

(Outermost cover)

The golf ball according to the present disclosure comprises an outermost cover positioned outside the intermediate layer.

The slab hardness (Hc) of the cover composition constituting the outermost cover is preferably 40 or less, more preferably 38 or less, and even more preferably 36 or less in Shore D hardness. If the slab hardness (Hc) is 40 or less, the shot feeling on approach shots is better. In addition, the slab hardness (Hc) is preferably 20 or more, more preferably 22 or more, and even more preferably 24 or more in Shore D hardness. If the slab hardness (Hc) is 20 or more, the spin rate on long iron shots does not become excessively great, and thus the flight distance performance is better.

The slab hardness (Hm) of the intermediate layer composition forming the intermediate layer is preferably greater than the slab hardness (Hc) of the cover composition forming the outermost cover. If the slab hardness (Hm) is greater than the slab hardness (Hc), the controllability of the flight distance on approach shots can be further enhanced, and the spin rate on long iron shots can be controlled.

The hardness difference (Hm-Hc) between the slab hardness (Hm) and the slab hardness (Hc) is more than 0, preferably 5 or more, more preferably 10 or more, and is preferably 50 or less, more preferably 48 or less, and even more preferably 46 or less in Shore D hardness.

The thickness (Tc) of the outermost cover is preferably 0.4 mm or more, more preferably 0.5 mm or more, and even more preferably 0.6 mm or more, and is preferably 1.0 mm or less, more preferably 0.9 mm or less, and even more preferably 0.8 mm or less.

(Cover composition and intermediate layer composition)

The outermost cover and the intermediate layer are preferably formed from a resin composition containing a base resin.

Examples of the base resin used in the resin composition for forming the outermost cover and the intermediate layer include an ionomer resin, a urethane resin (a thermoplastic polyurethane elastomer, and a thermosetting polyurethane elastomer), a thermoplastic styrene elastomer, a thermoplastic polyamide elastomer, and a thermoplastic polyester elastomer.

Examples of the ionomer resin include a binary ionomer resin prepared by neutralizing at least a part of carboxyl groups in a binary copolymer composed of an olefin and an $\alpha, \beta$-unsaturated carboxylic acid having 3 to 8 carbon atoms with a metal ion; a ternary ionomer resin prepared by neutralizing at least a part of carboxyl groups in a ternary copolymer composed of an olefin, an $\alpha, \beta$-unsaturated carboxylic acid having 3 to 8 carbon atoms and an $\alpha, \beta$-unsaturated carboxylic acid ester with a metal ion; and a mixture of those.

Examples of the binary ionomer resin include Himilan (registered trademark) 1555 (Na), 1557 (Zn), 1605 (Na), 1706 (Zn), 1707 (Na), AM7311 (Mg), AM7329 (Zn), AM7337 (available from Dow-Mitsui Polychemicals Co., Ltd.); Surlyn (registered trademark) 8945 (Na), 9945 (Zn), 8140 (Na), 8150 (Na), 9120 (Zn), 9150 (Zn), 6910 (Mg), 6120 (Mg), 7930 (Li), 7940 (Li), AD8546 (Li) (available from E.I. du Pont de Nemours and Company); and Iotek (registered trademark) 8000 (Na), 8030 (Na), 7010 (Zn), 7030 (Zn) (available from ExxonMobil Chemical Corporation).

Examples of the ternary ionomer resin include Himilan AM7327 (Zn), 1855 (Zn), 1856 (Na), AM7331 (Na) (available from Dow-Mitsui Polychemicals Co., Ltd.); Surlyn 6320 (Mg), 8120 (Na), 8320 (Na), 9320 (Zn), 9320W (Zn), HPF1000 (Mg), HPF2000 (Mg) (available from E.I. du Pont de Nemours and Company); and Iotek 7510 (Zn), 7520 (Zn) (available from ExxonMobil Chemical Corporation). It is noted that Na, Zn, Li, Mg or the like described in the parentheses after the trade names of the ionomer resin indicate metal ion type for neutralizing the ionomer resin.

The urethane resin has a urethane bond in the molecule. The urethane bond may be formed by a reaction between a polyol and a polyisocyanate. The polyol which is the raw material for the urethane bond has a plurality of hydroxy groups, and a low molecular weight polyol or a high molecular weight polyol may be used.

Specific examples of thermoplastic polyurethane elastomer include Elastollan (registered trademark) NY80A, NY84A, NY88A, NY95A, ET885, and ET890 (available from BASF Japan Ltd.).

As thermoplastic styrene based elastomer, a thermoplastic elastomer containing a styrene block can be suitably used. The thermoplastic elastomer containing the styrene block has a polystyrene block that is a hard segment, and a soft segment.

The thermoplastic elastomer containing the styrene block includes a styrenebutadiene-styrene block copolymer (SBS), a styrene-isoprene-styrene block copolymer (SIS), a styrene-isoprene-butadiene-styrene block copolymer (SIBS), a hydrogenated product of SBS, a hydrogenated product of SIS, and a hydrogenated product of SIBS. Examples of the hydrogenated product of SBS include a styrene-ethylene-butylene-styrene block copolymer (SEBS). Examples of the hydrogenated product of SIS include a styrene-ethylene-propylene-styrene block copolymer (SEPS). Examples of the hydrogenated product of SIBS include a styrene-ethylene-ethylene-propylene-styrene block copolymer (SEEPS).

Examples of thermoplastic styrene based elastomer include TEFABLOC (registered trademark) T3221C, T3339C, SJ4400N, SJ5400N, SJ6400N, SJ7400N, SJ8400N, SJ9400N, and SR04 (available from Mitsubishi Chemical Corporation).

The resin composition (cover composition) forming the outermost cover preferably contains the urethane resin and/or the ionomer resin as the base resin, particularly contains the urethane resin as the base resin. If the outermost cover contains the urethane resin as the base resin, the spin performance of the golf ball is further enhanced, and particularly the spin rate on approach shots is further increased.

When the cover composition contains the urethane resin as the base resin, the amount of the urethane resin is preferably 50 mass % or more, more preferably 60 mass % or more, and even more preferably 70 mass % or more in the base resin. The base resin of the cover composition may consist of the urethane resin (preferably thermoplastic urethane elastomer).

When the cover composition contains the ionomer resin as the base resin, the amount of the ionomer resin is preferably 50 mass % or more, more preferably 60 mass % or more, and even more preferably 70 mass % or more in the base resin. When the ionomer resin is contained, thermoplastic styrene elastomer is also preferably used in combination.

The resin composition (intermediate layer composition) forming the intermediate layer preferably contains the ionomer resin as the base resin. The amount of the ionomer resin is preferably 50 mass % or more, more preferably 60 mass % or more, and even more preferably 70 mass % or more in the base resin of the intermediate layer composition. When the ionomer resin is contained, thermoplastic styrene elastomer is also preferably used in combination.

The resin composition forming the outermost cover and the intermediate layer may contain a pigment component such as a white pigment (e.g. titanium oxide), a blue pigment and a red pigment, a weight adjusting agent such as zinc oxide, calcium carbonate and barium sulfate, a dispersant, an antioxidant, an ultraviolet absorber, a light stabilizer, a fluorescent material or fluorescent brightener, or the like, in addition to the above base resin.

The amount of the white pigment (e.g. titanium oxide) is preferably 0.5 part by mass or more, more preferably 1 part by mass or more, and even more preferably 1.5 parts by mass or more, and is preferably 10 parts by mass or less, more preferably 8 parts by mass or less, and even more preferably 6 parts by mass or less, with respect to 100 parts by mass of the base resin. If the amount of the white pigment is 0.5 part by mass or more, it is possible to impart the opacity to the intermediate layer or outermost cover. In addition, if the amount of the white pigment is 10 parts by mass or less, the obtained intermediate layer and outermost cover have better durability.

The method for molding the intermediate layer is not particularly limited, and examples thereof include a method which comprises molding the intermediate layer composition into a half shell in advance, covering the spherical core with two of the half shells, and performing compression molding; and a method which comprises injection molding the intermediate layer composition directly onto the spherical core to cover the spherical core.

Examples of the method for molding the cover include a method which comprises molding the cover composition into a hollow shell, covering the spherical body (the spherical core or the spherical body having the intermediate layer formed) with a plurality of the shells, and performing compression molding (preferably a method which comprises molding the cover composition into a hollow half-shell, covering the spherical body with two of the half-shells, and performing compression molding); and a method which comprises directly injection molding the cover composition directly onto the spherical body.

The golf ball body having the cover formed thereon is ejected from the mold, and is preferably subjected to surface treatments such as deburring, cleaning and sandblast where necessary.

In addition, if desired, a paint film or a mark may be formed. The thickness of the paint film is not particularly limited, and is preferably 5 $\mu$m or more, more preferably 6 $\mu$m or more, and even more preferably 7 $\mu$m or more, and is preferably 50 $\mu$m or less, more preferably 40 $\mu$m or less, and even more preferably 30 $\mu$m or less. If the thickness of the paint film is 5 $\mu$m or more, the paint film is hard to wear off even if the golf ball is used continuously, and if the thickness of the paint film is 50 $\mu$m or less, the dimple effect is fully obtained. It is noted that the effect of the present disclosure is not impaired since the paint film is very thin.

(Dimples)

The golf ball according to the present disclosure comprises an outermost cover having a plurality of dimples formed thereon. The dimples are concaves formed on the outermost cover. Next, the dimples formed on the outermost cover of the golf ball according to the present disclosure will be described with reference to the figures.

As shown in Fig. 1, the outermost cover of the golf ball 2 has a plurality of dimples 10 formed on the surface. Each of the dimples 10 has a circle contour.

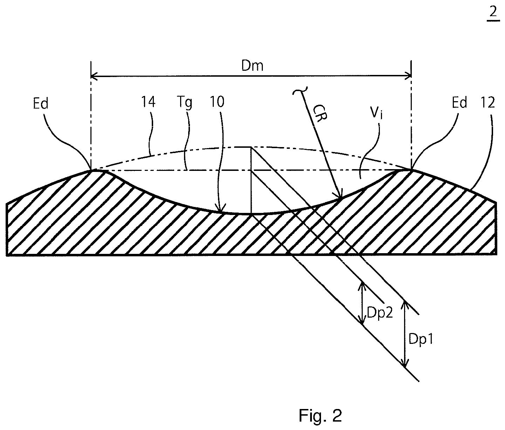

Fig. 2 shows a cross section of the golf ball 2 along a plane passing through the central point of the dimple 10 and the central point of the golf ball 2. The top-to-bottom direction in Fig. 2 is the depth direction of the dimple 10. In Fig. 2, a chain double-dashed line 14 indicates a virtual sphere. The surface of the virtual sphere 14 is the surface of the golf ball 2 when it is virtualized that no dimple 10 exists. The diameter of the virtual sphere 14 is equal to the diameter of the golf ball 2. The dimple 10 is recessed from the surface of the virtual sphere 14. The land 12 coincides with the surface of the virtual sphere 14. In the present embodiment, the cross-sectional shape of the dimple 10 is substantially a circular arc. The curvature radius of this circular arc is shown by a reference sign CR in Fig. 2.

In Fig. 2, an arrow Dm indicates the diameter of the dimple 10. The diameter Dm is a distance between one tangent point Ed and another tangent point Ed when a tangent line Tg traversing two sides of the dimple 10 is drawn. The tangent point Ed is also the edge of the dimple 10. The edge Ed defines the contour of the dimple 10.

In the present disclosure, the "lower volume of the dimple" is the volume of the dimple lower part surrounded by the plane connecting the intersection points Ed-Ed of the surface of the dimple and the surface of the dimple 10. The "total lower volume Vi of the dimples" is the sum of the lower volume of all the dimples.

The total lower volume Vi of the plurality of dimples of the golf ball is 365 mm$^3$ or more, preferably 385 mm$^3$ or more, more preferably 400 mm$^3$ or more. If the total lower volume Vi is 365 mm$^3$ or more, the maximum flying height particularly on driver shots by a golfer with a high head speed is controlled. The total lower volume Vi is preferably 500 mm$^3$ or less, more preferably 480 mm$^3$ or less, and even more preferably 460 mm$^3$ or less. If the total lower volume Vi is 500 mm$^3$ or less, the lift force that acts upon the golf ball on driver shots is fully obtained, and the flight distance performance is better.

The diameter Dm of the dimple 10 is preferably 2.0 mm or more, more preferably 2.5 mm or more, and even more preferably 2.8 mm or more, and is preferably 6.0 mm or less, more preferably 5.5 mm or less, and even more preferably 5.0 mm or less. If the diameter Dm is 2.0 mm or more, the dimples easily contribute to the turbulence, and if the diameter Dm is 6.0 mm or less, the nature of the golf ball that is substantially a spherical body can be kept.

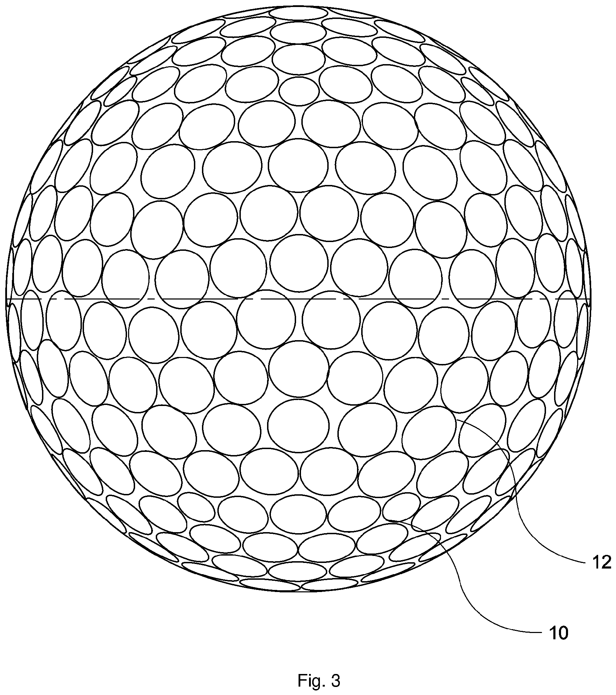

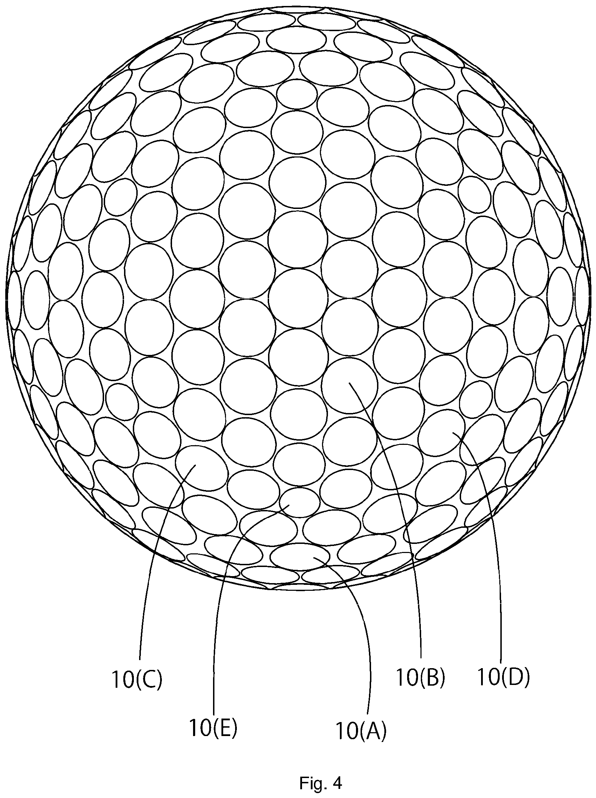

The plurality of dimples may be a plurality of dimples with a single diameter, or a combination of dimples with various types of diameters. For example, the golf ball 2 shown in Fig. 3 and Fig. 4 has five types of dimples, i.e. a dimple A with a diameter of 4.400 mm, a dimple B with a diameter of 4.285 mm, a dimple C with a diameter of 4.150 mm, a dimple D with a diameter of 3.875 mm, and a dimple E with a diameter of 3.000 mm.

In Fig. 2, a double ended arrow Dp1 indicates a first depth of the dimple 10. The first depth Dp1 is the distance between the deepest part of the dimple 10 and the surface of the virtual sphere 14. The first depth Dp1 is preferably 0.15 mm or more, more preferably 0.17 mm or more, and even more preferably 0.20 mm or more, and is preferably 0.45 mm or less, more preferably 0.43 mm or less, and even more preferably 0.40 mm or less. If the first depth Dp1 is 0.15 mm or more, the lift force obtained by the dimples fully occurs, and if the first depth Dp1 is 0.45 mm or less, the nature of the golf ball that is substantially a spherical body can be kept.

In Fig. 2, a double ended arrow Dp2 indicates a second depth of the dimple 10. The second depth Dp2 is the distance between the deepest part of the dimple 10 and the tangent line Tg. The second depth Dp2 is preferably 0.08 mm or more, more preferably 0.10 mm or more, and even more preferably 0.12 mm or more, and is preferably 0.30 mm or less, more preferably 0.28 mm or less, and even more preferably 0.26 mm or less. If the second depth Dp2 is 0.08 mm or more, the dimples easily contribute to the turbulence, and if the second depth Dp2 is 0.30 mm or less, the lift force obtained by the dimples is not excessively great, and the flight distance performance on driver shots is better.

The area A of the dimple 10 is the area of a region surrounded by the contour of the dimple 10 when the central point of the golf ball 2 is viewed at infinity. In the case that the dimple 10 has a circular shape, the area A is calculated by the following mathematical formula.

$$A = \pi \times (Dm/2)^2$$

For example, in the golf ball 2 shown in Fig. 3 and Fig. 4, the area of the dimple A is 15.21 mm$^2$, the area of the dimple B is 14.42 mm$^2$, the area of the dimple C is 13.53 mm$^2$, the area of the dimple D is 11.79 mm$^2$, and the area of the dimple E is 7.07 mm$^2$.

The ratio (total areas of dimples/surface area of virtual sphere) of the total area of the plurality of dimples in the surface area of the virtual sphere that is assumed to have no dimples on the outermost cover is referred to as an occupation ratio So. The occupation ratio So is preferably 75% or more, more preferably 78% or more, and even more preferably 81% or more, and is preferably 95% or less, more preferably 92% or less, and even more preferably 90% or less. If the occupation ratio So falls within the above range, the performance of the dimples can be fully exerted.

The number of the dimples can be appropriately adjusted depending on the diameter or occupation ratio of the dimples. It is noted that from the viewpoint of the occupation ratio or the function of the respective dimple, the total number of the dimples 10 is preferably 250 or more, more preferably 280 or more, and even more preferably 300 or more, and is preferably 450 or less, more preferably 410 or less, and even more preferably 390 or less.

(Construction of golf ball)

The golf ball according to the present disclosure comprises a spherical core, an intermediate layer covering the spherical core, and an outermost cover covering the intermediate layer. Examples of the construction of the golf ball include a three-piece golf ball composed of a single-layered spherical core, a single-layered intermediate layer covering the spherical core, and an outermost cover covering the intermediate layer; and a multi-piece golf ball (such as a four-piece golf ball, a five-piece golf ball or the like) composed of a single-layered spherical core, at least two intermediate layers covering the spherical core, and an outermost cover covering the intermediate layers.

The golf ball according to the present disclosure preferably has a diameter ranging from 40 mm to 45 mm. In light of satisfying the regulation of US Golf Association (USGA), the diameter is particularly preferably 42.67 mm or more. In light of prevention of air resistance, the diameter is more preferably 44 mm or less, and particularly preferably 42.80 mm or less. In addition, the golf ball according to the present disclosure preferably has a mass of 40 g or more and 50 g or less. In light of obtaining greater inertia, the mass is more preferably 44 g or more, and particularly preferably 45.00 g or more. In light of satisfying the regulation of USGA, the mass is particularly preferably 45.93 g or less.

When the golf ball has a diameter in the range of from 40 mm to 45 mm, the compression deformation amount (shrinking amount along the compression direction) of the golf ball when applying a load from an initial load of 98 N to a final load of 1275 N to the golf ball is preferably 2.0 mm or more, more preferably 2.1 mm or more, and even more preferably 2.2 mm or more, and is preferably 3.0 mm or less, more preferably 2.9 mm or less, and even more preferably 2.8 mm or less. If the compression deformation amount falls within the above range, the shot feeling of the golf ball is better.

The surface hardness of the golf ball is preferably 45 or more, more preferably 48 or more, and even more preferably 50 or more, and is preferably 65 or less, more preferably 63 or less, and even more preferably 61 or less in Shore D hardness. If the surface hardness of the golf ball falls within the above range, the impact resistance is excellent and the surface is hardly damaged.

EXAMPLES

Next, the present disclosure will be described in detail by way of examples. However, the present disclosure is not limited to the examples described below. Various changes and modifications without departing from the spirit of the present disclosure are included in the scope of the present disclosure.

[Evaluation method]

(1) Compression deformation amount (mm)

The compression deformation amount was measured with a YAMADA type compression tester "SCH". The golf ball or spherical core was placed on a metal rigid plate of the tester. A metal cylinder slowly fell toward the golf ball or spherical core. The golf ball or spherical core sandwiched between the bottom of the cylinder and the rigid plate deformed. The travelling distance of the cylinder when applying a load from an initial load of 98 N to a final load of 1275 N to the golf ball or spherical core was measured. The compression deformation amount (mm) is the travelling distance. The travelling speed of the cylinder before applying the initial load was 0.83 mm/s. The travelling speed of the cylinder when applying the load from the initial load to the final load was 1.67 mm/s.

(2) Core hardness (Shore C hardness)

The hardness measured at the surface portion of the core was adopted as the surface hardness of the core. In addition, the core was cut into two hemispheres to obtain a cut plane, and the hardness at the central point of the cut plane and the hardness at the predetermined distance from the central point in the radius direction were measured. It is noted that each hardness was measured at four points, and the average value thereof was calculated. An automatic hardness tester (Digitest II, available from Bareiss company) using a testing device of "Shore C" was used to measure the hardness.

(3) Slab hardness (Shore D hardness)

Sheets with a thickness of about 2 mm were produced by injection molding the resin composition. The sheets were stored at a temperature of 23 °C for two weeks. At least three of these sheets were stacked on one another so as not to be affected by the measuring substrate on which the sheets were placed, and the hardness of the stack was measured with an automatic hardness tester (Digitest II, available from Bareiss company) using a testing device of "Shore D".

(4) Surface hardness of golf ball

The hardness measured at the land portion of the golf ball surface was adopted as the surface hardness of the ball. The hardness was measured at four points, and the average value thereof was calculated. An automatic hardness tester (Digitest II, available from Bareiss company) using a testing device of "Shore D" was used to measure the hardness.

(5) W#1 shot (head speed: 50 m/s)

A driver W#1 ("SRIXON (registered trademark) ZX7", Shaft hardness: X, Loft angle: 10.5°, available from Sumitomo Rubber Industries, Ltd.) was installed on a swing machine available from Golf Laboratories, Inc. The hitting point was set at the face center. The golf ball was hit under a condition of a head speed of 50 m/sec, and the spin rate (rpm) and ball velocity (m/s) right after hitting the golf ball, and the flight distance (m) (the distance from the launch point to the stop point) were measured. The measurement was conducted twelve times for each golf ball, and the average value of the obtained data was adopted as the measurement value for that golf ball. The spin rate and ball velocity were measured by continuously taking a sequence of photographs of the golf ball right after hitting the golf ball.

(5) W#1 shot (head speed: 35 m/s)

A driver W#1 ("XXIO (registered trademark) 12", Shaft hardness: R, Loft angle: 10.5°, available from Sumitomo Rubber Industries, Ltd.) was installed on a swing machine available from Golf Laboratories, Inc. The hitting point was set at the face center. The golf ball was hit under a condition of a head speed of 35 m/sec, and the spin rate (rpm) and ball velocity (m/s) right after hitting the golf ball, and the flight distance (m) (the distance from the launch point to the stop point) were measured. The measurement was conducted twelve times for each golf ball, and the average value of the obtained data was adopted as the measurement value for that golf ball. The spin rate and ball velocity were measured by continuously taking a sequence of photographs of the golf ball right after hitting the golf ball.

[Production of golf ball]

(1) Production of spherical core

According to the formulations shown in Table 1, the materials were kneaded with a kneading roll to obtain the core compositions.

The core compositions shown in Table 1 were heat pressed in upper and lower molds, each having a hemispherical cavity, to obtain the spherical cores. It is noted that barium sulfate was added in an appropriate amount such that the obtained golf balls had a mass of 45.3 g.

Table 1-1

| Spherical core No. | | A1 | A2 | B1 | B2 |
|---|---|---|---|---|---|
| Formulation (parts by mass) | Polybutadiene rubber | 20 | 20 | - | - |
| | Natural rubber | 80 | 80 | 100 | 100 |
| | Zinc diacrylate | 45.0 | 45.0 | 46.3 | 46.3 |
| | Zinc oxide | 5 | 5 | 5 | 5 |
| | Barium sulfate | Appropriate amount[*1] | Appropriate amount[*1] | Appropriate amount[*1] | Appropriate amount[*1] |
| | Benzoic acid | - | - | - | - |
| | Bis(pentabromophenyl) disulfide | - | - | - | - |
| | Diphenyl disulfide | - | - | - | - |
| | Dicumyl peroxide | 0.9 | 0.9 | 0.9 | 0.9 |
| Molding condition | Vulcanizing temperature (°C) | 170 | 170 | 170 | 170 |
| | Vulcanizing time (min) | 20 | 20 | 20 | 20 |
| Diameter (mm) | | 39.5 | 39.1 | 39.5 | 38.5 |
| Compression deformation amount (mm) | | 3.21 | 3.24 | 3.13 | 3.18 |
| Hardness distribution (Shore C) | Center hardness (H0) | 55.9 | 55.6 | 48.8 | 48.3 |
| | Hardness at 2.5 mm point from center ($H_{2.5}$) | 60.2 | 59.8 | 58.6 | 58.2 |
| | Hardness at 5.0 mm point from center ($H_{5.0}$) | 63.4 | 63.1 | 63.5 | 63.1 |
| | Hardness at 7.5 mm point from center ($H_{7.5}$) | 64.1 | 63.8 | 66.0 | 65.4 |
| | Hardness at 10 mm point from center ($H_{10}$) | 64.4 | 64.1 | 68.7 | 68.3 |
| | Hardness at 12.5 mm point from center ($H_{12.5}$) | 72.8 | 72.2 | 75.1 | 74.4 |
| | Hardness at 15 mm point from center ($H_{15}$) | 79.1 | 78.7 | 79.7 | 79.1 |
| | Surface hardness (Hs) | 82.2 | 81.6 | 82.3 | 81.6 |

*1) The amount of barium sulfate was adjusted such that the golf balls had a mass of 45.3 g.

Table 1-2

| Spherical core No. | | C | D | E | F |
|---|---|---|---|---|---|
| Formulation (parts by mass) | Polybutadiene rubber | 60 | 100 | 100 | 100 |
| | Natural rubber | 40 | - | - | - |
| | Zinc diacrylate | 40.7 | 34.3 | 30.6 | 33.2 |
| | Zinc oxide | 5 | 5 | 5 | 10 |
| | Barium sulfate | Appropriate amount[*1] | Appropriate amount[*1] | Appropriate amount[*1] | Appropriate amount[*1] |
| | Benzoic acid | - | - | - | 2 |
| | Bis(pentabromophenyl) disulfide | - | - | 0.4 | 0.4 |
| | Diphenyl disulfide | - | 0.4 | | |
| | Dicumyl peroxide | 0.9 | 0.7 | 0.7 | 0.7 |
| Molding condition | Vulcanizing temperature (°C) | 170 | 150 | 155 | 170 |
| | Vulcanizing time (min) | 20 | 20 | 20 | 15 |
| Diameter (mm) | | 39.5 | 39.5 | 39.5 | 39.5 |
| Compression deformation amount (mm) | | 3.18 | 3.18 | 3.16 | 3.20 |
| Hardness distribution (Shore C) | Center hardness (H0) | 59.1 | 70.7 | 64.8 | 55.4 |
| | Hardness at 2.5 mm point from center ($H_{2.5}$) | 62.1 | 71.9 | 67.7 | 65.1 |
| | Hardness at 5.0 mm point from center ($H_{5.0}$) | 63.9 | 72.5 | 69.3 | 69.6 |
| | Hardness at 7.5 mm point from center ($H_{7.5}$) | 64.4 | 73.0 | 69.9 | 70.2 |
| | Hardness at 10 mm point from center ($H_{10}$) | 65.5 | 75.5 | 72.6 | 70.6 |
| | Hardness at 12.5 mm point from center ($H_{12.5}$) | 71.9 | 77.1 | 75.1 | 71.0 |
| | Hardness at 15 mm point from center ($H_{15}$) | 78.3 | 77.7 | 79.8 | 76.7 |
| | Surface hardness (Hs) | 81.2 | 79.3 | 82.2 | 86.2 |
| *1) The amount of barium sulfate was adjusted such that the golf balls had a mass of 45.3 g. | | | | | |

The materials used in Table 1 are shown as follows.

Polybutadiene rubber: "BR-730" (high-cis polybutadiene rubber, amount of cis-1,4 bond: 95 mass %, amount of 1,2-vinyl bond: 1.3 mass %, Moony viscosity ($ML_{1+4}$ (100 ºC): 55, molecular weight distribution (Mw/Mn): 3) available from JSR Corporation

Natural rubber: "CV60" (Moony viscosity ($ML_{1+4}$ (100 ºC) = 60) available from Dau Tieng Rubber Corporation

Zinc diacrylate: "ZN-DA90S" available from Nisshoku Techno Fine Chemical Co., Ltd.

Zinc oxide: "Ginrei R" available from Toho Zinc Co., Ltd.

Barium sulfate: "Barium sulfate BD" available from Sakai Chemical Industry Co., Ltd.

Benzoic acid: (purity: at least 98%) available from Tokyo Chemical Industry Co. Ltd.

Bis(pentabromophenyl) disulfide: available from Kawaguchi Chemical Industry Co., Ltd.

Diphenyl disulfide: available from Sumitomo Seika Chemicals Co., Ltd.

Dicumyl peroxide: "Percumyl (registered trademark) D" available from NOF Corporation

(2) Preparation of resin composition (intermediate layer composition and cover composition)

According to the formulations shown in Table 2, the materials were extruded with a twin-screw kneading type extruder to prepare the resin compositions in a pellet form.

Table 2

| Resin composition No. | | a | b | c | d | e | f | g |
|---|---|---|---|---|---|---|---|---|
| Formulation (parts by mass) | Surlyn 8150 | 50 | - | - | - | - | - | - |
| | Himilan 1605 | - | 47 | - | - | - | - | - |
| | Himilan AM7329 | 50 | 50 | - | - | - | - | - |
| | Himilan 1555 | - | - | 45 | 41 | - | - | - |
| | Himilan 1557 | - | - | 45 | 41 | - | - | - |
| | TEFABLOC T3221C | - | 3 | 10 | 18 | - | - | - |
| | Elastollan NY80A | - | - | - | - | 100 | - | - |
| | Elastollan NY84A | - | - | - | - | - | 100 | - |
| | Elastollan NY88A | - | - | - | - | - | - | 50 |
| | Elastollan NY95A | - | - | - | - | - | - | 50 |
| | Tinuvin 770 | - | - | - | - | 0.2 | 0.2 | 0.2 |
| | Titanium dioxide | 4 | 4 | 4 | 4 | 4 | 4 | 4 |
| Slab hardness (Shore D) | | 68 | 63 | 55 | 50 | 27 | 31 | 40 |

Surlyn (registered trademark) 8150: sodium ion neutralized ethylene-methacrylic acid copolymer ionomer resin available from E.I. du Pont de Nemours and Company
Himilan (registered trademark) 1605: sodium ion neutralized ethylene-methacrylic acid copolymer ionomer resin available from Dow-Mitsui Polychemicals Co., Ltd.
Himilan (registered trademark) AM7329: zinc ion neutralized ethylene-methacrylic acid copolymer ionomer resin available from Dow-Mitsui Polychemicals Co., Ltd.
Himilan (registered trademark) 1555: sodium ion neutralized ethylene-methacrylic acid copolymer ionomer resin available from Dow-Mitsui Polychemicals Co., Ltd.
Himilan (registered trademark) 1557: zinc ion neutralized ethylene-methacrylic acid copolymer ionomer resin available from Dow-Mitsui Polychemicals Co., Ltd.
TEFABLOC (registered trademark) T3221C: thermoplastic styrene based elastomer available from Mitsubishi Chemical Corporation
Elastollan (registered trademark) NY80A: thermoplastic polyurethane elastomer available from BASF Japan Ltd.
Elastollan (registered trademark) NY84A: thermoplastic polyurethane elastomer available from BASF Japan Ltd.
Elastollan (registered trademark) NY88A: thermoplastic polyurethane elastomer available from BASF Japan Ltd.
Elastollan (registered trademark) NY95A: thermoplastic polyurethane elastomer available from BASF Japan Ltd.
Tinuvin (registered trademark) 770: hindered amine-based light stabilizer available from BASF Japan Ltd.
Titanium dioxide: A-220 available from Ishihara Sangyo Kaisha, Ltd.

(3) Formation of intermediate layer and cover

The resin composition (intermediate layer composition) was injection molded on the spherical core to obtain the intermediate layer-covering spherical body. The obtained intermediate layer-covering spherical body was charged into a final mold provided with a plurality of pimples on the cavity surface. Half shells were obtained from the resin composition (cover composition) by a compression molding method. The intermediate layer-covering spherical body charged into the final mold was covered with two of the half shells to obtain the golf balls having an outermost cover on which a plurality of dimples were formed. Dimples had an inverted shape of the pimple shape on the cavity surface. The specifications of the dimples formed on the outermost cover are shown in Tables 3 and 4. The evaluation results regarding the obtained golf balls are shown in Tables 5 and 6.

Table 3

| | Type | Number | Diameter Dm (mm) | Depth Dp1 (mm) | Lower depth Dp2 (mm) | Curvature radius CR (mm) | Lower volume (mm$^3$) |
|---|---|---|---|---|---|---|---|
| I | A | 60 | 4.400 | 0.2186 | 0.1049 | 23.1 | 0.80 |
| | B | 158 | 4.285 | 0.2127 | 0.1049 | 21.9 | 0.76 |
| | C | 72 | 4.150 | 0.2060 | 0.1049 | 20.6 | 0.71 |
| | D | 36 | 3.875 | 0.1930 | 0.1049 | 17.9 | 0.62 |
| | E | 12 | 3.000 | 0.1577 | 0.1049 | 10.8 | 0.37 |
| II | A | 60 | 4.400 | 0.2356 | 0.1219 | 19.9 | 0.93 |
| | B | 158 | 4.285 | 0.2297 | 0.1219 | 18.9 | 0.88 |
| | C | 72 | 4.150 | 0.2230 | 0.1219 | 17.7 | 0.83 |
| | D | 36 | 3.875 | 0.2100 | 0.1219 | 15.5 | 0.72 |
| | E | 12 | 3.000 | 0.1747 | 0.1219 | 9.3 | 0.43 |
| III | A | 60 | 4.400 | 0.2526 | 0.1389 | 17.5 | 1.06 |
| | B | 158 | 4.285 | 0.2467 | 0.1389 | 16.6 | 1.00 |
| | C | 72 | 4.150 | 0.2400 | 0.1389 | 15.6 | 0.94 |
| | D | 36 | 3.875 | 0.2270 | 0.1389 | 13.6 | 0.82 |
| | E | 12 | 3.000 | 0.1917 | 0.1389 | 8.2 | 0.49 |
| IV | A | 60 | 4.400 | 0.2696 | 0.1559 | 15.6 | 1.19 |
| | B | 158 | 4.285 | 0.2637 | 0.1559 | 14.8 | 1.13 |
| | C | 72 | 4.150 | 0.2570 | 0.1559 | 13.9 | 1.06 |
| | D | 36 | 3.875 | 0.2440 | 0.1559 | 12.1 | 0.92 |
| | E | 12 | 3.000 | 0.2087 | 0.1559 | 7.3 | 0.55 |
| V | A | 60 | 4.400 | 0.2866 | 0.1729 | 14.1 | 1.32 |
| | B | 158 | 4.285 | 0.2807 | 0.1729 | 13.4 | 1.25 |
| | C | 72 | 4.150 | 0.2740 | 0.1729 | 12.5 | 1.17 |
| | D | 36 | 3.875 | 0.2610 | 0.1729 | 10.9 | 1.02 |
| | E | 12 | 3.000 | 0.2257 | 0.1729 | 6.6 | 0.61 |
| VI | A | 60 | 4.400 | 0.3036 | 0.1899 | 12.8 | 1.45 |
| | B | 158 | 4.285 | 0.2977 | 0.1899 | 12.2 | 1.37 |
| | C | 72 | 4.150 | 0.2910 | 0.1899 | 11.4 | 1.29 |
| | D | 36 | 3.875 | 0.2780 | 0.1899 | 10.0 | 1.12 |
| | E | 12 | 3.000 | 0.2427 | 0.1899 | 6.0 | 0.67 |
| VII | A | 24 | 4.600 | 0.2915 | 0.1673 | 15.9 | 1.39 |
| | B | 54 | 4.500 | 0.2862 | 0.1673 | 15.2 | 1.33 |
| | C | 210 | 4.400 | 0.2810 | 0.1673 | 14.5 | 1.27 |
| | D | 24 | 4.000 | 0.2612 | 0.1673 | 12.0 | 1.05 |
| | E | 12 | 3.000 | 0.2201 | 0.1673 | 6.8 | 0.59 |

(continued)

| | Type | Number | Diameter Dm (mm) | Depth Dp1 (mm) | Lower depth Dp2 (mm) | Curvature radius CR (mm) | Lower volume (mm$^3$) |
|---|---|---|---|---|---|---|---|
| VIII | A | 12 | 4.600 | 0.2895 | 0.1653 | 16.1 | 1.38 |
| | B | 48 | 4.500 | 0.2842 | 0.1653 | 15.4 | 1.32 |
| | C | 86 | 4.400 | 0.2790 | 0.1653 | 14.7 | 1.26 |
| | D | 60 | 4.300 | 0.2738 | 0.1653 | 14.1 | 1.20 |
| | E | 120 | 4.200 | 0.2688 | 0.1653 | 13.4 | 1.15 |
| | F | 12 | 3.050 | 0.2198 | 0.1653 | 7.1 | 0.61 |

Table 4

| Dimple pattern No. | I | II | III | IV | V | VI | VII | VIII |
|---|---|---|---|---|---|---|---|---|
| Front view | Fig. 3 | Fig. 3 | Fig. 3 | Fig. 3 | Fig. 3 | Fig. 3 | Fig. 5 | Fig. 7 |
| Plane view | Fig. 4 | Fig. 4 | Fig. 4 | Fig. 4 | Fig. 4 | Fig. 4 | Fig. 6 | Fig. 8 |
| Total number | 338 | 338 | 338 | 338 | 338 | 338 | 324 | 338 |
| Total lower volume Vi (mm$^3$) | 245 | 285 | 325 | 365 | 405 | 445 | 405 | 405 |
| Occupation ratio (%) | 81.6 | 81.6 | 81.6 | 81.6 | 81.6 | 81.6 | 84.4 | 85.4 |

Table 5-1

| Golf ball No. | | 1 | 2 | 3 | 4 | 5 | 6 |
|---|---|---|---|---|---|---|---|
| Core | No. | A1 | B1 | A1 | A1 | A2 | B2 |
| | Diameter (mm) | 39.5 | 39.5 | 39.5 | 39.5 | 39.1 | 38.5 |
| | Compression deformation amount (mm) | 3.21 | 3.13 | 3.21 | 3.21 | 3.24 | 3.18 |
| Hardness difference (Shore C) | Hardness difference (H$_{2.5}$-H0) | 4.3 | 9.8 | 4.3 | 4.3 | 4.2 | 9.9 |
| | Hardness difference (H$_{5.0}$-H$_{2.5}$) | 3.2 | 4.9 | 3.2 | 3.2 | 3.3 | 4.9 |
| | Hardness difference (H$_{7.5}$-H$_{5.0}$) | 0.7 | 2.5 | 0.7 | 0.7 | 0.7 | 2.3 |
| | Hardness difference (H$_{10}$-H$_{7.5}$) | 0.3 | 2.7 | 0.3 | 0.3 | 0.3 | 2.9 |
| | Hardness difference (H$_{12.5}$-H$_{10}$) | 8.4 | 6.4 | 8.4 | 8.4 | 8.1 | 6.1 |
| | Hardness difference (H$_{15}$-H$_{12.5}$) | 6.3 | 4.6 | 6.3 | 6.3 | 6.5 | 4.7 |
| | Hardness difference (Hs-H$_{15}$) | 3.1 | 2.6 | 3.1 | 3.1 | 2.9 | 2.5 |
| | Hardness difference (Hs-H0) | 26.3 | 33.5 | 26.3 | 26.3 | 26.0 | 33.3 |
| Intermediate layer | Resin composition No. | a | a | b | c | a | a |
| | Thickness (mm) | 1.0 | 1.0 | 1.0 | 1.0 | 1.0 | 1.3 |
| | Slab hardness (Shore D) | 66 | 68 | 63 | 55 | 68 | 68 |
| Cover | Resin composition No. | f | f | 9 | e | f | f |
| | Thickness (mm) | 0.6 | 0.6 | 0.6 | 0.6 | 0.8 | 0.8 |
| | Slab hardness (Shore D) | 31 | 31 | 40 | 27 | 31 | 31 |
| Dimple | Pattern No. | V | V | V | V | V | V |
| | Total lower volume Vi (mm$^3$) | 405 | 405 | 405 | 405 | 405 | 405 |
| | Occupation ratio (%) | 81.6 | 81.6 | 81.6 | 81.6 | 81.6 | 81.6 |
| Golf ball | Surface hardness (Shore D) | 59 | 59 | 60 | 52 | 56 | 56 |
| | Compression deformation amount (mm) | 2.76 | 2.68 | 2.79 | 2.84 | 2.82 | 2.75 |

(continued)

| Golf ball No. | | 1 | 2 | 3 | 4 | 5 | 6 |
|---|---|---|---|---|---|---|---|
| W#1 shot (HS: 50 m/s) | Spin rate (rpm) | 2390 | 2360 | 2350 | 2580 | 2530 | 2490 |
| | Ball velocity (m/s) | 70.7 | 70.4 | 70.6 | 70.4 | 70.6 | 70.4 |
| | Flight distance L50 (m) | 243.8 | 242.7 | 243.7 | 240.4 | 241.9 | 241.4 |
| W#1 shot (HS: 35 m/s) | Spin rate (rpm) | 2720 | 2680 | 2660 | 2930 | 2870 | 2830 |
| | Ball velocity (m/s) | 49.6 | 49.4 | 49.5 | 49.4 | 49.5 | 49.4 |
| | Flight distance L35 (m) | 163.9 | 163.4 | 163.9 | 161.7 | 162.5 | 162.3 |
| Flight distance difference (L50-L35) | | 79.9 | 79.3 | 79.8 | 78.7 | 79.4 | 79.1 |

Table 5-2

| Golf ball No. | | 7 | 8 | 9 | 10 | 11 | 12 |
|---|---|---|---|---|---|---|---|
| Core | No. | C | A1 | A1 | A1 | A1 | A1 |
| | Diameter (mm) | 39.5 | 39.5 | 39.5 | 39.5 | 39.5 | 39.5 |
| | Compression deformation amount (mm) | 3.18 | 3.21 | 3.21 | 3.21 | 3.21 | 3.21 |
| Hardness difference (Shore C) | Hardness difference ($H_{2.5}$-H0) | 3.0 | 4.3 | 4.3 | 4.3 | 4.3 | 4.3 |
| | Hardness difference ($H_{5.0}$-$H_{2.5}$) | 1.8 | 3.2 | 3.2 | 3.2 | 3.2 | 3.2 |
| | Hardness difference ($H_{7.5}$-$H_{5.0}$) | 0.5 | 0.7 | 0.7 | 0.7 | 0.7 | 0.7 |
| | Hardness difference ($H_{10}$-$H_{7.5}$) | 1.1 | 0.3 | 0.3 | 0.3 | 0.3 | 0.3 |
| | Hardness difference ($H_{12.5}$-$H_{10}$) | 6.4 | 8.4 | 8.4 | 8.4 | 8.4 | 8.4 |
| | Hardness difference ($H_{15}$-$H_{12.5}$) | 6.4 | 6.3 | 6.3 | 6.3 | 6.3 | 6.3 |
| | Hardness difference (Hs-$H_{15}$) | 2.9 | 3.1 | 3.1 | 3.1 | 3.1 | 3.1 |
| | Hardness difference (Hs-H0) | 22.1 | 26.3 | 26.3 | 26.3 | 26.3 | 26.3 |
| Intermediate layer | Resin composition No. | a | a | a | a | a | d |
| | Thickness (mm) | 1.0 | 1.0 | 1.0 | 1.0 | 1.0 | 1.0 |
| | Slab hardness (Shore D) | 68 | 68 | 68 | 68 | 68 | 50 |
| Cover | Resin composition No. | f | f | f | f | f | c |
| | Thickness (mm) | 0.6 | 0.6 | 0.6 | 0.6 | 0.6 | 0.6 |
| | Slab hardness (Shore D) | 31 | 31 | 31 | 31 | 31 | 55 |
| Dimple | Pattern No. | V | VI | IV | VII | VIII | V |
| | Total lower volume Vi ($mm^3$) | 405 | 445 | 365 | 405 | 405 | 405 |
| | Occupation ratio (%) | 81.6 | 81.6 | 81.6 | 84.4 | 85.4 | 81.6 |
| Golf ball | Surface hardness (Shore D) | 59 | 59 | 59 | 59 | 59 | 53 |
| | Compression deformation amount (mm) | 2.73 | 2.76 | 2.76 | 2.76 | 2.76 | 2.68 |
| W#1 shot (HS: 50 m/s) | Spin rate (rpm) | 2410 | 2390 | 2390 | 2390 | 2390 | 2210 |
| | Ball velocity (m/s) | 71.5 | 70.7 | 70.7 | 70.7 | 70.7 | 71 |
| | Flight distance L50 (m) | 247.7 | 243.2 | 244.3 | 243.9 | 244.1 | 247.1 |
| W#1 shot (HS: 35 m/s) | Spin rate (rpm) | 2740 | 2720 | 2720 | 2720 | 2720 | 2460 |
| | Ball velocity (m/s) | 50.2 | 49.6 | 49.6 | 49.6 | 49.6 | 49.8 |
| | Flight distance L35 (m) | 166.5 | 164.9 | 163.1 | 164.1 | 164.4 | 165.4 |
| Flight distance difference (L50-L35) | | 81.2 | 78.3 | 81.2 | 79.8 | 79.7 | 81.7 |

Table 6-1

| Golf ball No. | | 13 | 14 | 15 | 16 | 17 | 18 |
|---|---|---|---|---|---|---|---|
| Core | No. | D | E | F | A1 | A1 | A1 |
| | Diameter (mm) | 39.5 | 39.5 | 39.5 | 39.5 | 39.5 | 39.5 |
| | Compression deformation amount (mm) | 3.18 | 3.16 | 3.20 | 3.21 | 3.21 | 3.21 |
| Hardness difference (Shore C) | Hardness difference ($H_{2.5}$-H0) | 1.2 | 2.9 | 9.7 | 4.3 | 4.3 | 4.3 |
| | Hardness difference ($H_{5.0}$-$H_{2.5}$) | 0.6 | 1.6 | 4.5 | 3.2 | 3.2 | 3.2 |
| | Hardness difference ($H_{7.5}$-$H_{5.0}$) | 0.5 | 0.6 | 0.6 | 0.7 | 0.7 | 0.7 |
| | Hardness difference ($H_{10}$-$H_{7.5}$) | 2.5 | 2.7 | 0.4 | 0.3 | 0.3 | 0.3 |
| | Hardness difference ($H_{12.5}$-$H_{10}$) | 1.6 | 2.5 | 0.4 | 8.4 | 8.4 | 8.4 |
| | Hardness difference ($H_{15}$-$H_{12.5}$) | 0.6 | 4.7 | 5.7 | 6.3 | 6.3 | 6.3 |
| | Hardness difference (Hs-$H_{15}$) | 1.6 | 2.4 | 9.5 | 3.1 | 3.1 | 3.1 |
| | Hardness difference (Hs-H0) | 8.6 | 17.4 | 30.8 | 26.3 | 26.3 | 26.3 |
| Intermediate layer | Resin composition No. | a | a | a | a | a | a |
| | Thickness (mm) | 1.0 | 1.0 | 1.0 | 1.0 | 1.0 | 1.0 |
| | Slab hardness (Shore D) | 68 | 68 | 68 | 68 | 68 | 68 |
| Cover | Resin composition No. | f | f | f | f | f | f |
| | Thickness (mm) | 0.6 | 0.6 | 0.6 | 0.6 | 0.6 | 0.6 |
| | Slab hardness (Shore D) | 31 | 31 | 31 | 31 | 31 | 31 |
| Dimple | Pattern No. | V | V | V | III | II | I |
| | Total lower volume Vi (mm$^3$) | 405 | 405 | 405 | 325 | 285 | 245 |
| | Occupation ratio (%) | 81.6 | 81.6 | 81.6 | 81.6 | 81.6 | 81.6 |
| Golf ball | Surface hardness (Shore D) | 59 | 59 | 59 | 59 | 59 | 59 |
| | Compression deformation amount (mm) | 2.73 | 2.71 | 2.75 | 2.76 | 2.76 | 2.76 |
| W#1 shot (HS: 50 m/s) | Spin rate (rpm) | 2510 | 2420 | 2350 | 2390 | 2390 | 2390 |
| | Ball velocity (m/s) | 73.0 | 73.1 | 73.1 | 70.7 | 70.7 | 70.7 |
| | Flight distance L50 (m) | 254.3 | 255.6 | 256.2 | 244.9 | 244.5 | 244.0 |
| W#1 shot (HS: 35 m/s) | Spin rate (rpm) | 2850 | 2750 | 2660 | 2720 | 2720 | 2720 |
| | Ball velocity (m/s) | 51.0 | 51.0 | 51.0 | 49.6 | 49.6 | 49.6 |
| | Flight distance L35 (m) | 168.5 | 169.1 | 169.7 | 162.5 | 161.7 | 160.9 |
| Flight distance difference (L50-L35) | | 85.8 | 86.5 | 86.5 | 82.4 | 82.8 | 83.1 |

Table 6-2

| Golf ball No. | | 19 | 20 | 21 | 22 | 23 |
|---|---|---|---|---|---|---|
| Core | No. | E | E | E | E | E |
| | Diameter (mm) | 39.5 | 39.5 | 39.5 | 39.5 | 39.5 |
| | Compression deformation amount (mm) | 3.16 | 3.16 | 3.16 | 3.16 | 3.16 |

(continued)

| Golf ball No. | | 19 | 20 | 21 | 22 | 23 |
|---|---|---|---|---|---|---|
| Hardness difference (Shore C) | Hardness difference ($H_{2.5}$-H0) | 2.9 | 2.9 | 2.9 | 2.9 | 2.9 |
| | Hardness difference ($H_{5.0}$-$H_{2.5}$) | 1.6 | 1.6 | 1.6 | 1.6 | 1.6 |
| | Hardness difference ($H_{7.5}$-$H_{5.0}$) | 0.6 | 0.6 | 0.6 | 0.6 | 0.6 |
| | Hardness difference ($H_{10}$-$H_{7.5}$) | 2.7 | 2.7 | 2.7 | 2.7 | 2.7 |
| | Hardness difference ($H_{12.5}$-$H_{10}$) | 2.5 | 2.5 | 2.5 | 2.5 | 2.5 |
| | Hardness difference ($H_{15}$-$H_{12.5}$) | 4.7 | 4.7 | 4.7 | 4.7 | 4.7 |
| | Hardness difference (Hs-$H_{15}$) | 2.4 | 2.4 | 2.4 | 2.4 | 2.4 |
| | Hardness difference (Hs-H0) | 17.4 | 17.4 | 17.4 | 17.4 | 17.4 |
| Intermediate layer | Resin composition No. | d | d | a | a | a |
| | Thickness (mm) | 1.0 | 1.0 | 1.0 | 1.0 | 1.0 |
| | Slab hardness (Shore D) | 50 | 50 | 68 | 68 | 68 |
| Cover | Resin composition No. | b | c | f | f | f |
| | Thickness (mm) | 0.6 | 0.6 | 0.6 | 0.6 | 0.6 |
| | Slab hardness (Shore D) | 63 | 55 | 31 | 31 | 31 |
| Dimple | Pattern No. | V | V | III | II | I |
| | Total lower volume Vi ($mm^3$) | 405 | 405 | 325 | 285 | 245 |
| | Occupation ratio (%) | 81.6 | 81.6 | 81.6 | 81.6 | 81.6 |
| Golf ball | Surface hardness (Shore D) | 53 | 53 | 59 | 59 | 59 |
| | Compression deformation amount (mm) | 2.62 | 2.66 | 2.71 | 2.71 | 2.71 |
| W#1 shot (HS: 50 m/s) | Spin rate (rpm) | 2200 | 2240 | 2420 | 2420 | 2420 |
| | Ball velocity (m/s) | 73.4 | 73.3 | 73.1 | 73.1 | 73.1 |
| | Flight distance L50 (m) | 257.8 | 257.2 | 255.6 | 255.2 | 254.8 |
| W#1 shot (HS: 35 m/s) | Spin rate (rpm) | 2450 | 2480 | 2760 | 2760 | 2760 |
| | Ball velocity (m/s) | 51.2 | 51.1 | 51.0 | 51.0 | 51.0 |
| | Flight distance L35 (m) | 170.9 | 170.4 | 167.4 | 166.7 | 166.0 |
| Flight distance difference (L50-L35) | | 86.9 | 86.8 | 88.2 | 88.5 | 88.8 |

The golf balls No. 1 to 12 are the cases that the spherical core is formed from a rubber composition containing a natural rubber, and a plurality of dimples has a total lower volume of 365 $mm^3$ or more and a surface occupation ratio of 75 % or more.

These golf balls No. 1 to 12 have a lowered difference (L50-L35) between the flight distance (L50) on driver shots by a golfer with a high head speed (50 m/s) and the flight distance (L35) on driver shots by a golfer with a low head speed (35 m/s). Thus, these golf balls No. 1 to 12 reduce the flight distance handicap due to the difference in the head speed.

The golf balls No. 13 to 15, 19 and 20 are the cases that the spherical core is formed from a rubber composition not containing a natural rubber.

The golf balls No. 16 to 18 are the cases that a plurality of dimples has a total lower volume of less than 365 $mm^3$.

The golf balls No. 21 to 23 are the cases that the spherical core is formed from a rubber composition not containing a natural rubber, and a plurality of dimples has a total lower volume of less than 365 $mm^3$.

In these golf balls No. 13 to 23, the difference (L50-L35) is not lowered, and the flight distance handicap due to the difference in the head speed is not reduced.

(Embodiments of the present disclosure)

The present disclosure (1) is a golf ball comprising a spherical core, an intermediate layer covering the spherical core, and an outermost cover positioned outside the intermediate layer and having a plurality of dimples formed thereon, wherein the spherical core is formed from a rubber composition containing a base rubber, a co-crosslinking agent, and a crosslinking initiator, the base rubber contains a natural rubber, a total lower volume of the plurality of dimples is 365 mm$^3$ or more, and an occupation ratio of a total area of the plurality of dimples in a surface area of a virtual sphere that is assumed to have no dimples on the outermost cover is 75% or more.

The present disclosure (2) is the golf ball according to the present disclosure (1), wherein a center hardness (H0) of the spherical core, a hardness ($H_{2.5}$) at a point having a radial distance of 2.5 mm from a center of the spherical core, a hardness ($H_{5.0}$) at a point having a radial distance of 5.0 mm from the center of the spherical core, a hardness ($H_{7.5}$) at a point having a radial distance of 7.5 mm from the center of the spherical core, a hardness ($H_{10}$) at a point having a radial distance of 10 mm from the center of the spherical core, a hardness ($H_{12.5}$) at a point having a radial distance of 12.5 mm from the center of the spherical core, a hardness ($H_{15}$) at a point having a radial distance of 15 mm from the center of the spherical core, and a surface hardness (Hs) of the spherical core satisfy a relationship of $H0<H_{2.5}<H_{5.0}<H_{7.5}<H_{10}<H_{12.5}<H_{15}<Hs$, and the center hardness (H0) of the spherical core is 60 or less in Shore C hardness.

The present disclosure (3) is the golf ball according to the present disclosure (2), wherein the center hardness (H0), the hardness ($H_{2.5}$), the hardness ($H_{10}$), the hardness ($H_{12.5}$) and the hardness ($H_{15}$) satisfy relationships of $H_{2.5}-H0 \geq 3.0$, $H_{12.5}-H_{10} \geq 3.0$ and $H_{15}-H_{12.5} \geq 3.0$ in Shore C hardness.

The present disclosure (4) is the golf ball according to the present disclosure (2) or (3), wherein the hardness ($H_{5.0}$), the hardness ($H_{7.5}$) and the hardness ($H_{10}$) satisfy relationships of $H_{7.5}-H_{5.0}<3.0$ and $H_{10}-H_{7.5}<3.0$ in Shore C hardness.

The present disclosure (5) is the golf ball according to any one of the present disclosures (2) to (4), wherein a hardness difference (Hs-HO) between the surface hardness (Hs) of the spherical core and the center hardness (H0) of the spherical core is 20 or more in Shore C hardness.

The present disclosure (6) is the golf ball according to any one of the present disclosures (1) to (5), wherein the total lower volume of the plurality of dimples is 400 mm$^3$ or more.

The present disclosure (7) is the golf ball according to any one of the present disclosures (1) to (6), wherein an amount of the natural rubber ranges from 20 mass % to 100 mass % in 100 mass % of the base rubber.

The present disclosure (8) is the golf ball according to any one of the present disclosures (1) to (7), wherein a slab hardness of an intermediate layer composition forming the intermediate layer is greater than a slab hardness of a cover composition forming the outermost cover.

The present disclosure (9) is the golf ball according to any one of the present disclosures (1) to (8), wherein a cover composition forming the outermost cover is a resin composition containing a urethane resin as a base resin, and a slab hardness of the cover composition forming the outermost cover is 40 or less in Shore D hardness.

The present disclosure (10) is the golf ball according to any one of the present disclosures (1) to (9), wherein an intermediate layer composition forming the intermediate layer is a resin composition containing an ionomer resin as a base resin, and a slab hardness of the intermediate layer composition forming the intermediate layer is 50 or more in Shore D hardness.

This application is based on Japanese patent application No. 2023-185329 filed on October 30, 2023, the content of which is hereby incorporated by reference.

## Claims

1. A golf ball comprising a spherical core, an intermediate layer covering the spherical core, and an outermost cover positioned outside the intermediate layer and having a plurality of dimples formed thereon, wherein

   the spherical core is formed from a rubber composition containing a base rubber, a co-crosslinking agent, and a crosslinking initiator,
   the base rubber contains a natural rubber,
   a total lower volume of the plurality of dimples is 365 mm$^3$ or more, and
   an occupation ratio of a total area of the plurality of dimples in a surface area of a virtual sphere that is assumed to have no dimples on the outermost cover is 75% or more.

2. The golf ball according to claim 1, wherein a center hardness (H0) of the spherical core, a hardness ($H_{2.5}$) at a point having a radial distance of 2.5 mm from a center of the spherical core, a hardness ($H_{5.0}$) at a point having a radial distance of 5.0 mm from the center of the spherical core, a hardness ($H_{7.5}$) at a point having a radial distance of 7.5 mm from the center of the spherical core, a hardness ($H_{10}$) at a point having a radial distance of 10 mm from the center of the spherical core, a hardness ($H_{12.5}$) at a point having a radial distance of 12.5 mm from the center of the spherical core, a hardness ($H_{15}$) at a point having a radial distance of 15 mm from the center of the spherical core, and a surface hardness (Hs) of the spherical core satisfy a relationship of $H0 < H_{2.5} < H_{5.0} < H_{7.5} < H_{10} < H_{12.5} < H_{15} < Hs$, and the center hardness (H0) of the spherical core is 60 or less in Shore C hardness.

3. The golf ball according to claim 2, wherein the center hardness (H0), the hardness ($H_{2.5}$), the hardness ($H_{10}$), the hardness ($H_{12.5}$) and the hardness ($H_{15}$) satisfy relationships of $H_{2.5}-H0 \geq 3.0$, $H_{12.5}-H_{10} \geq 3.0$ and $H_{15}-H_{12.5} \geq 3.0$ in Shore C hardness.

4. The golf ball according to claim 3, wherein the center hardness (H0), the hardness ($H_{2.5}$), the hardness ($H_{10}$), the hardness ($H_{12.5}$) and the hardness ($H_{15}$) satisfy relationships of $12.0 \geq H_{2.5}-H0$, $11.0 \geq H_{12.5}-H_{10}$ and $10.0 \geq H_{15}-H_{12.5}$ in Shore C hardness.

5. The golf ball according to any one of claims 2 to 4, wherein the hardness ($H_{5.0}$), the hardness ($H_{7.5}$) and the hardness ($H_{10}$) satisfy relationships of $H_{7.5}-H_{5.0} < 3.0$ and $H_{10}-H_{7.5} < 3.0$ in Shore C hardness.

6. The golf ball according to claim 5, wherein the hardness ($H_{5.0}$), the hardness ($H_{7.5}$) and the hardness ($H_{10}$) satisfy relationships of $0.2 \leq H_{7.5}-H_{5.0}$ and $0.1 \leq H_{10}-H_{7.5}$ in Shore C hardness.

7. The golf ball according to any one of claims 2 to 6, wherein a hardness difference (Hs-H0) between the surface hardness (Hs) of the spherical core and the center hardness (H0) of the spherical core is 20 or more in Shore C hardness.

8. The golf ball according to claim 7, wherein the hardness difference (Hs-H0) between the surface hardness (Hs) of the spherical core and the center hardness (H0) of the spherical core ranges from 20 to 40 in Shore C hardness.

9. The golf ball according to any one of claims 1 to 8, wherein the total lower volume of the plurality of dimples is 400 mm$^3$ or more.

10. The golf ball according to any one of claims 1 to 9, wherein an amount of the natural rubber ranges from 20 mass % to 100 mass % in 100 mass % of the base rubber.

11. The golf ball according to any one of claims 1 to 10, wherein a slab hardness of an intermediate layer composition forming the intermediate layer is greater than a slab hardness of a cover composition forming the outermost cover.

12. The golf ball according to any one of claims 1 to 11, wherein a cover composition forming the outermost cover is a resin composition containing a urethane resin as a base resin, and
a slab hardness of the cover composition forming the outermost cover is 40 or less in Shore D hardness.

13. The golf ball according to any one of claims 1 to 12, wherein an intermediate layer composition forming the intermediate layer is a resin composition containing an ionomer resin as a base resin, and
a slab hardness of the intermediate layer composition forming the intermediate layer is 50 or more in Shore D hardness.

14. The golf ball according to any one of claims 2 to 13, wherein the surface hardness (Hs) of the spherical core ranges from 70 to 90 in Shore C hardness.

15. The golf ball according to any one of claims 1 to 14, wherein the golf ball has a surface hardness in a range from 45 to 65 in Shore D hardness.

Fig. 1

Fig. 2

Fig. 3

10(C)  10(E)  10(A)  10(B)  10(D)

Fig. 4

Fig. 5

Fig. 6

Fig. 7

Fig. 8

Europäisches
Patentamt

European
Patent Office

Office européen
des brevets

# EUROPEAN SEARCH REPORT

Application Number

EP 24 20 3493

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 668 980 B1 (DUNLOP SPORTS CO LTD [JP]) 21 December 2016 (2016-12-21) * paragraphs [0036], [0045], [0047], [0056], [0072], [0077], [0119]-[0121]; claim 1; tables 13-19 * | 1-15 | INV. A63B37/00 |
| X | US 2010/298067 A1 (WATANABE HIDEO [JP]) 25 November 2010 (2010-11-25) | 1 | |
| Y | * paragraphs [0044], [0116] * | 2-8,10 | |
| A | | 9,11-15 | |
| Y | US 2014/357408 A1 (SHINDO AYAKA [JP] ET AL) 4 December 2014 (2014-12-04) | 2-8,10 | |
| A | * paragraphs [0007]-[0008], [0038], table 1-3 * | 1 | |

TECHNICAL FIELDS
SEARCHED        (IPC)

A63B

The present search report has been drawn up for all claims

| Place of search | Date of completion of the search | Examiner |
|---|---|---|
| Munich | 20 February 2025 | Lundblad, Hampus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 20 3493

This annex lists the patent family members relating to the patent documents cited in the above-mentioned European search report.
The members are as contained in the European Patent Office EDP file on
The European Patent Office is in no way liable for these particulars which are merely given for the purpose of information.

20-02-2025

| Patent document cited in search report | | Publication date | Patent family member(s) | | Publication date |
|---|---|---|---|---|---|
| EP 2668980 | B1 | 21-12-2016 | CN | 103446716 A | 18-12-2013 |
| | | | EP | 2668980 A2 | 04-12-2013 |
| | | | JP | 6061500 B2 | 18-01-2017 |
| | | | JP | 2013248298 A | 12-12-2013 |
| | | | KR | 20130135756 A | 11-12-2013 |
| | | | US | 2013324318 A1 | 05-12-2013 |
| US 2010298067 | A1 | 25-11-2010 | JP | 5754079 B2 | 22-07-2015 |
| | | | JP | 2010269146 A | 02-12-2010 |
| | | | US | 2010298067 A1 | 25-11-2010 |
| | | | US | 2012238377 A1 | 20-09-2012 |
| US 2014357408 | A1 | 04-12-2014 | JP | 6910102 B2 | 28-07-2021 |
| | | | JP | 2015006313 A | 15-01-2015 |
| | | | US | 2014357408 A1 | 04-12-2014 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP S6092780 A
- JP S6171069 A
- JP 2023185329 A